# FASCICULE DE BREVET EUROPEEN

(11) **EP 3 635 690 B1**
(45) Date de publication et mention de la délivrance du brevet: **22.11.2023**
(21) Numéro de dépôt: 18728407.0
(22) Date de dépôt: 07.06.2018
(51) Int. Cl.: G07C 5/08, G09F 3/20

(54) **DISPOSITIF D'ENREGISTREMENT DE DONNÉES DE DÉPLACEMENT, PROCÉDÉ ET PROGRAMME CORRESPONDANT**
VORRICHTUNG ZUM AUFZEICHNEN VON BEWEGUNGSDATEN, ENTSPRECHENDES VERFAHREN UND PROGRAMM
DEVICE FOR RECORDING MOVEMENT DATA, CORRESPONDING METHOD AND PROGRAM

(30) Priorité: 07.06.2017 FR 1755075
(43) Date de publication de la demande: 15.04.2020
(73) Titulaire: Insurlytech, 35000 Rennes (FR)
(72) Inventeur: DANDOIS, Christophe, 35000 Rennes (FR); VALLEE, Emmanuel, 92130 Issy Les Moulineaux (FR); BEKRAR, Noureddine, 35510 Cesson-Sevigne (FR)
(74) Mandataire: Vidon Brevets & Stratégie
(86) Numéro de dépôt international: PCT/EP2018/065069
(87) Numéro de publication internationale: WO 2018/224608

(56) Documents cités:
- EP-A1- 2 911 120
- EP-A1- 2 949 510
- WO-A1-2012/080741
- WO-A1-2015/049522
- US-A- 5 502 912
- US-A1- 2004 079 847
- US-A1- 2015 312 655

## Description

### 1. Domaine

L'invention se rapporte au domaine de l'enregistrement de données de déplacement. L'invention se rapporte plus spécifiquement à l'enregistrement de données de déplacement de véhicules à moteur (automobiles, motos, etc.). Plus particulièrement encore, l'invention se rapporte à un dispositif d'enregistrement de données de déplacement de véhicules à moteur fonctionnant de manière autonome et disposant de capacités de transmission de données à destination d'un terminal de communication.

### 2. Art Antérieur

Des dispositifs de suivi des déplacements des véhicules roulants motorisés ont récemment été développés pour permettre un meilleur suivi des conducteurs. Notamment, de tels dispositifs ont été commercialisés par des compagnies d'assurance afin de suivre, au plus près, le comportement des conducteurs assurés et offrir des prestations d'assurance adaptées au comportement de l'assuré. Ces solutions sont par exemple divisées en deux classes principales.

Dans une première classe, le suivi de conducteur ne nécessite aucune modification au véhicule. L'assuré utilise un terminal de communication mobile intelligent (de type terminal de communication), dans lequel une application mobile particulière est installée. Un exemple d'une application de ce type est GECO^{™}. L'application exploite les fonctions d'un terminal de communication pour proposer un service d'analyse de conduite. Elle mesure l'efficacité énergétique des déplacements et calcule le mode de conduite optimal à adopter. L'application offre notamment des outils pour comprendre et améliorer sa conduite : note d'efficacité, affichage des trajets sur une cartographie, pistes d'amélioration et historique des trajets. Comme d'autres applications du même type, celle-ci souffre cependant de certains défauts, dont le fait qu'elle est énergivore et nécessite de fréquents rechargements de la batterie, voire une alimentation en continu, ce qui rend l'expérience utilisateur contraignante et/ou rebutante. Par ailleurs, le fait de réaliser la collecte de données métrologiques sur un parc de téléphones hétéroclites implique une prise en charge d'une multitude de composants GPS et d'accéléromètres aux performances et précisions différentes, introduisant une variation non contrôlée de la précision des mesures et par conséquent des risques d'erreur dans les acquisitions de données ne permettant pas de garantir une répétabilité des mesures sur tous les terminaux de communication utilisables.

Dans une deuxième classe, le suivi du conducteur passe par une modification du véhicule. Cette classe de solution est notamment mise en oeuvre par certains assureurs ou par certains gestionnaires de flotte de véhicule. Ces solutions permettent une mise en oeuvre de services d'assurance ajustés en fonction de la conduite de l'assuré. L'objectif est de récompenser les bons conducteurs pour leur comportement vertueux au volant, en permettant une réduction tarifaire. Pour ce faire, un boîtier de captation de données est installé au sein du véhicule et connecté à la prise ODB de celui-ci (la prise « *On-Board Diagnostics »* ODB- est destinée au diagnostic embarqué dans la plupart des véhicules à moteur thermique produits depuis les années 2000). Les boîtiers sont équipés d'un système de captures de mouvement pour mesurer les accélérations, les virages brusques, les freinages, et (théoriquement) les changements de voie. Ils récupèrent une partie des trames d'informations échangées par les réseaux électroniques du véhicule (via le bus CAN ou la prise LIN). Lorsqu'ils n'utilisent pas les données GPS des véhicules eux-mêmes, certains de ces boîtiers intègrent également un module GPS. Certains boîtiers peuvent se connecter à un terminal de communication de l'utilisateur, permettant à celui-ci de suivre ses performances d'éco-conduite et de sécurité sur une application mobile conçue à cet usage. Ils peuvent également transmettre des informations directement chez l'assureur via une interface de téléphonie (GSM, 3G, 4G) intégrée dans le boîtier. Ce type de boîtier présente cependant un problème majeur, lié à la nécessité d'une installation sur une prise ODB. En effet, cette prise ODB pourvoie à la fourniture de données en provenance du véhicule et elle fournit l'énergie nécessaire au boîtier (notamment pour les fonctions de communication avec l'assureur, par l'intermédiaire de l'interface de téléphonie). Or, ces prises ODB peuvent d'une part être complexes à trouver et d'autre part leur emplacement peut ne pas être adapté à l'utilisation d'un tel de mesure. Par exemple, certaines prise ODB se situent dans l'habitable, au niveau du levier de vitesse quand d'autres sont située au sein du capot moteur. Ceci ne facilite pas une installation simple de ces boîtiers, et ne permet pas forcément à ces boîtiers de remplir toutes les fonctions pour lesquelles il est prévu : notamment, si le boîtier dispose d'une fonction de captation de position par GPS, mais que la prise ODB à laquelle le boitier est supposé pouvoir être connecté n'autorise pas le *boitier* à être en situation de réception de ce signal GPS (car se trouvant par exemple sous le capot avant du véhicule), le boitier ne fonctionnera pas correctement. Un autre désavantage est que lorsque le boitier se situe dans l'habitacle, il est nécessaire de prévoir une rallonge de taille suffisante pour pouvoir le placer à un endroit convenable, où il ne gênera pas le conducteur, tout en remplissant les fonctions pour lesquelles il est prévu, ce qui peut poser de sérieux problèmes de sécurité lorsque l'emplacement de la prise ODB n'est pas satisfaisant (par exemple proche du volant, du levier de vitesse, etc.).

Le document WO2012/080741 A1 décrit un téléphone mobile pouvant être installé dans un véhicule et configuré pour enregistrer les données de déplacement du véhicule. Le document EP2949510 A1 décrit un dispositif d'acquisition d'informations concernant le véhicule dans lequel il a été positionné et adapté pour transmettre à distance les informations. Le dispositif d'acquisition peut être un appareil mobile qui est associé à un support pour le maintenir en position dans le véhicule. Le Document WO2015/049522 A1 décrit un dispositif d'enregistrement de données de déplacement de véhicule qui comprend des moyens de fixation du dispositif au pare-brise.

### 3. Résumé

L'invention ne pose pas ces problèmes de l'art antérieur. L'invention se rapporte à un dispositif d'enregistrement de données de déplacement autonome qui permet de fournir des données fiables. Plus particulièrement, l'invention se rapporte à un dispositif d'enregistrement de données de déplacement. Selon l'invention, un tel dispositif comprend des moyens de captation et d'enregistrement de données en provenance d'au moins un module de mesure d'accélération et d'au moins un module de localisation, dispositif se présentant sous la forme d'un parallélépipède rectangle comprenant une face antérieure et une face postérieure. Ce dispositif comprend également des moyens de fixation sur la face interne d'un parebrise d'un véhicule à moteur, les moyens de fixation étant positionnés sur la face antérieure du dispositif d'enregistrement de données de déplacement.

Ainsi, le dispositif objet de l'invention peut être fixé d'une manière simple sur le véhicule et ne nécessite pas de connaissance technique particulière pour sa mise en place.

Selon l'invention, la face antérieure comprend en outre au moins une grille d'au moins une cellule photovoltaïque, positionnée de sorte qu'elle puisse recevoir de la lumière en provenance de l'extérieur du véhicule à moteur.

Ainsi, le dispositif peut recevoir de l'énergie solaire en provenance de l'extérieur du véhicule et donc peut être rechargé de manière plus simple et plus efficace et surtout en continu, tout au long de l'utilisation du véhicule.

Selon l'invention, le dispositif d'enregistrement de données de déplacement comprend en outre au moins un logement d'insertion d'un justificatif d'assurance.

Ainsi, le dispositif se substitue au porte-justificatif existant.

Selon l'invention, le logement d'insertion d'un justificatif d'assurance comprend les moyens de fixation dudit dispositif d'enregistrement des données de déplacement audit parebrise.

Selon une caractéristique particulière, le dispositif comprend en outre au moins une diode électroluminescente disposée de sorte qu'elle soit visible de l'extérieur du véhicule à moteur.

Ainsi, le dispositif peut émettre au moins une information, à destination de l'extérieur du véhicule, par l'intermédiaire de ces diodes.

Selon une caractéristique particulière, le dispositif comprend en outre des moyens de traitement de commandes d'activation et de modulation une diode électroluminescente, lesdites commandes provenant d'au moins un terminal de communication d'un utilisateur.

Ainsi, les diodes électroluminescentes du dispositif peuvent être activées et ou les couleurs et/ou l'affichage des informations modulées depuis l'extérieur, par exemple en utilisant un terminal de communication comme passerelle de transmission de commandes.

Selon un mode de réalisation particulier, le dispositif comprend en outre des moyens de transmission de données à destination d'au moins un terminal de communication d'un utilisateur.

Ainsi, le dispositif est en mesure de transférer les données de déplacement à destination d'un terminal d'utilisateur (par exemple le terminal de l'utilisateur du véhicule), ce terminal jouant un rôle de passerelle de transmission de ces informations à destination d'un serveur d'une entité de gestion.

Selon une caractéristique particulière, lesdits moyens de transmission de données sont activés sur requête du terminal de communication de l'utilisateur.

Ainsi, le dispositif de l'invention économise de l'énergie car il ne gaspille pas d'énergie à tenter de communiquer lorsque le terminal de communication de l'utilisateur est absent.

Selon un autre aspect, l'invention se rapporte également à un procédé d'enregistrement de données de déplacement, procédé mise en oeuvre au sein d'un dispositif d'enregistrement de données de déplacement tel que présenté précédemment. Un tel procédé comprend :
- une mesure de données d'accélération, selon une première période temporelle prédéterminée, à l'aide dudit au moins un module de mesure d'accélération ;
- un enregistrement, à partir desdites données d'accélération, d'au moins un histogramme d'accélération, selon une deuxième période temporelle prédéterminée, supérieure à la première période temporelle prédéterminée ;
- une mesure d'une vitesse de déplacement ;
- un enregistrement de données de localisation, selon un paramétrage prédéterminé, en fonction de la vitesse de déplacement préalablement mesurée ;

Selon une implémentation non revendiquée, les différentes étapes des procédés selon la technique proposée sont mises en oeuvre par un ou plusieurs logiciels ou programmes d'ordinateur, comprenant des instructions logicielles destinées à être exécutées par un processeur de données d'un module relais selon la technique proposée et étant conçu pour commander l'exécution des différentes étapes des procédés.

En conséquence, la technique proposée vise aussi un programme, susceptible d'être exécuté par un ordinateur ou par un processeur de données, ce programme comportant des instructions pour commander l'exécution des étapes d'un procédé tel que mentionné ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

La technique proposée et non revendiquée vise aussi un support d'informations lisible par un processeur de données, et comportant des instructions d'un programme tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique (de type clé USB ou carte à mémoire), ou encore un moyen d'enregistrement magnétique, par exemple une disquette (floppy dise) ou un disque dur.

D'autre part, le support d'informations peut être un support transmissible tel qu'un signal électrique ou optique, qui peut être acheminé via un câble électrique ou optique, par radio ou par d'autres moyens. Le programme selon la technique proposée peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Selon un mode de réalisation non revendiqué, la technique proposée est mise en oeuvre au moyen de composants logiciels et/ou matériels. Dans cette optique, le terme "module" peut correspondre dans ce document aussi bien à un composant logiciel, qu'à un composant matériel ou à un ensemble de composants matériels et logiciels.

Un composant logiciel correspond à un ou plusieurs programmes d'ordinateur, un ou plusieurs sous-programmes d'un programme, ou de manière plus générale à tout élément d'un programme ou d'un logiciel apte à mettre en oeuvre une fonction ou un ensemble de fonctions, selon ce qui est décrit ci-dessous pour le module concerné. Un tel composant logiciel est exécuté par un processeur de données d'une entité physique (terminal, serveur, passerelle, routeur, etc.) et est susceptible d'accéder aux ressources matérielles de cette entité physique (mémoires, supports d'enregistrement, bus de communication, cartes électroniques d'entrées/sorties, interfaces utilisateur, etc.).

De la même manière, un composant matériel correspond à tout élément d'un ensemble matériel (ou hardware) apte à mettre en oeuvre une fonction ou un ensemble de fonctions, selon ce qui est décrit ci-dessous pour le module concerné. Il peut s'agir d'un composant matériel programmable ou avec processeur intégré pour l'exécution de logiciel, par exemple un circuit intégré, une carte à puce, une carte à mémoire, une carte électronique pour l'exécution d'un micrologiciel (firmware), etc.

Chaque composante du système précédemment décrit met bien entendu en oeuvre ses propres modules logiciels.

### 4. Figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- les figures 1A et 1B exposent l'aspect extérieur général du dispositif d'enregistrement selon l'invention ;
- La figure 2 présente les dimensions du boîtier dans un mode de réalisation particulier de l'invention;
- La figure 3 présente l'architecture matérielle interne du dispositif d'enregistrement.

### 5. Description

### 5.1. Principe général

Le principe général de l'invention consiste à disposer d'un boîtier, autonome, d'enregistrement de déplacement du véhicule, ledit boîtier comprenant au moins une interface de communication avec un terminal de communication d'un utilisateur. À la différence des boîtiers qui se connectent sur une interface ODB du véhicule, le boîtier de l'invention, de par son caractère autonome, ne pose pas de problème de positionnement au sein du véhicule. Par ailleurs, le boîtier comprend les moyens nécessaires à la captation et à la transmission de données à destination d'un terminal de communication de l'utilisateur, ce terminal de communication jouant le rôle de relai de transmission de ces données à destination de serveurs, gérés par exemple par une compagnie d'assurance auprès de laquelle l'utilisateur est assuré ou encore à destination d'une entreprise gérant un parc de véhicules utilisés par des salariés.

Plus particulièrement, dans le mode de réalisation revendiqué, l'invention est mise en oeuvre sous la forme d'un boîtier faisant office de réceptacle de justificatif d'assurance, justificatif qui est également appelé « carte verte » en Europe. Un tel boîtier comprend, dans ce mode de réalisation, une face antérieure, dont au moins une portion peut être fixée sur la face interne du parebrise du véhicule, c'est-à-dire à l'intérieur du véhicule et une face postérieure, comprenant notamment les moyens électroniques de captation et de communication du véhicule. De manière complémentaire, la face antérieure comprend également au moins une cellule photoélectrique, cellule permettant au boîtier de recevoir et transformer de l'énergie solaire en électricité destinée à alimenter et à recharger le dispositif. Selon l'invention, pour permettre une mise en oeuvre simple, rapide du dispositif d'enregistrement, il est nécessaire, dans ce mode de réalisation, que le dispositif possède des dimensions (longueur, largeur) raisonnablement proches de celles du justificatif d'assurance. En d'autres termes, les inventeurs ont cherché à rendre le dispositif le plus compact possible tout en assurant son caractère autonome.

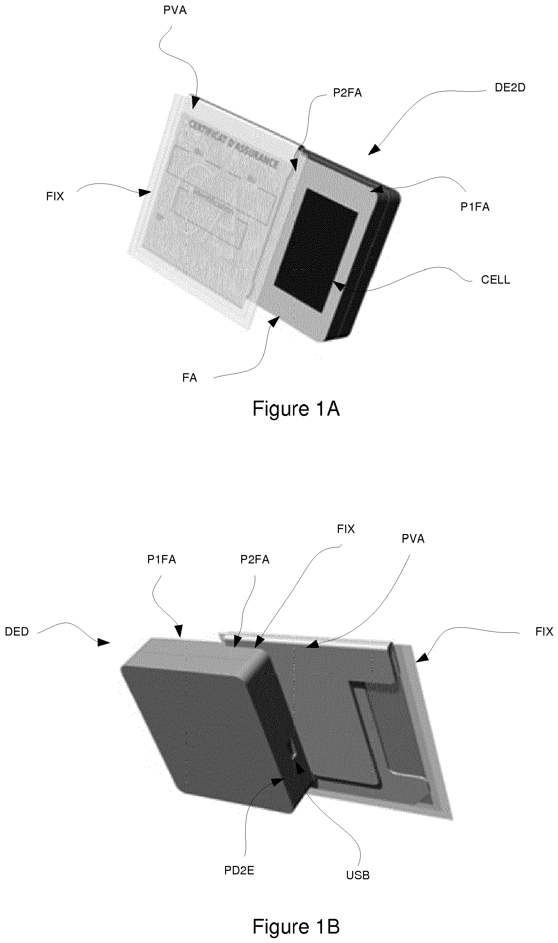

On décrit en relation avec les figures 1A et 1B, un mode de réalisation d'un dispositif tel présenté précédemment. Ce dispositif d'enregistrement de données de déplacement (DE2D) se présente globalement sous la forme d'un parallélépipède rectangle, présentant une face antérieure (FA), divisée en deux parties. Une première partie (P1FA) comprend au moins une grille d'au moins une cellule photovoltaïque (CELL). Cette première partie est destinée à être placée visible en regard de la face interne du parebrise du véhicule, afin de capter un maximum de lumière en provenance de l'extérieur et donc de générer un maximum de courant électrique, afin d'assurer l'autonomie du dispositif d'enregistrement. La deuxième partie (P2FA) est destinée à être solidaire d'un porte-vignette d'assurance (PVA) et comprend des moyens de fixation (FIX), par exemple sous la forme d'un adhésif double face. Dans un premier mode de réalisation, le porte-vignette d'assurance (PVA) prolonge la deuxième partie et fait donc partie intégrante du dispositif d'enregistrement (mode présenté en figure 1A et 1B) : les moyens de fixation sont donc présents sur le pourtour du porte-vignette d'assurance (PVA). Dans un deuxième mode de réalisation, la deuxième partie comprend un adhésif permettant de fixer le dispositif d'enregistrement à un porte-vignette d'assurance existant, déjà présent sur le parebrise. Quel que soit le mode de réalisation, ces caractéristiques du dispositif et notamment cette manière de la fixer assure que d'une part le dispositif est intégré de façon simple à l'environnement et d'autre part que le dispositif reste visible de l'extérieur, ce qui est particulièrement intéressant, notamment lorsque le dispositif dispose d'une diode électroluminescente pour afficher des données à destination de l'extérieur. Lorsque le porte-vignette d'assurance (PVA) est intégré au dispositif, ceci assure encore une plus grande intégration, tout en maximisant la surface de fixation au parebrise du véhicule, gage d'une meilleure fixation du dispositif.

Sur le pourtour du dispositif (PD2E), on retrouve dans ce mode de réalisation un port de connexion (et de rechargement) de type USB. Ce port a une double fonction : d'une part il permet de réaliser un paramétrage du dispositif (voire un changement de micrologiciel) lorsque des modifications interviennent, par exemple pour l'enregistrement des données ou pour la création des histogrammes d'accélération (cf. infra). Le port peut également être utilisé pour recharger la batterie du dispositif lorsque celle-ci est déchargée (par exemple en cas de non utilisation du dispositif pendant une période prolongée, ledit dispositif étant entreposé dans un endroit sombre). Dans ce mode de réalisation, les moyens de fixation(FIX), sont intégrés porte-vignette d'assurance (PVA), l'ensemble formant ainsi un dispositif prêt à recevoir un vignette d'assurance.

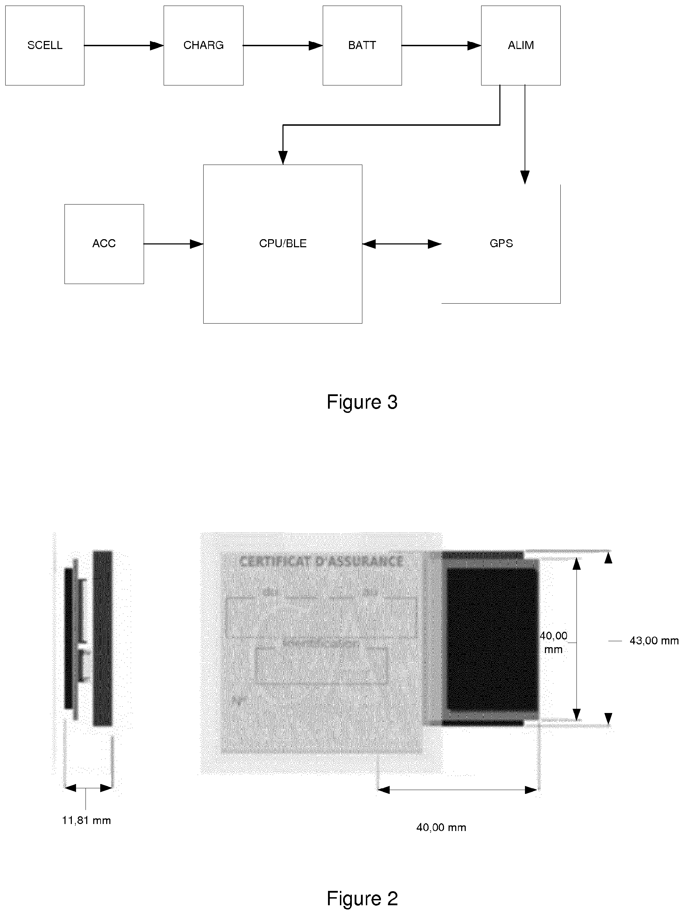

La largeur, la longueur et l'épaisseur du parallélépipède rectangle qui intègre les composants électroniques et la batterie du dispositif dépendent essentiellement de conditions opérationnelles telles que la taille de la batterie et la surface de la grille de cellules photovoltaïque. Des exemples sont décrits ci-après dans un mode de réalisation particulier, en relation avec la figure 2. La face postérieure et le pourtour du dispositif d'enregistrement de données ne comprennent pas de caractéristiques particulières à l'exception d'une prise de type micro USB et/ou mini-USB dont l'objectif est double, comme exposé précédemment : d'une part permettre une configuration du dispositif d'enregistrement, par exemple en usine et/ou en atelier de (re)conditionnement, par l'intermédiaire d'un ordinateur ; d'autre part, cette prise peut également permettre le chargement initial du dispositif d'enregistrement, postérieurement à sa fabrication et/ou à son (re)conditionnement (suite par exemple à une opération de maintenance).

### 5.2. Cas d'usage

Il est décrit, ci-après, l'utilisation du dispositif d'enregistrement de données selon l'invention, dans le cas d'une mise en oeuvre de type assurance de véhicule et/ou de conducteur.

Lorsqu'un nouvel utilisateur rejoint le service (par exemple de la compagnie d'assurance, ou de tout autre fournisseur de services compétent), il reçoit sa vignette d'assurance et son support (communément appelée « carte verte »). Deux cas de profils d'utilisateurs coexistent :
- automobile, camion, camionnette : La vignette est collée dans le coin inférieur du parebrise comme toute vignette d'assurance actuelle. Il n'y a pas de support mécanique dédié à installer, ni d'opération spécifique à réaliser sur le pare-brise (à part éventuellement un petit nettoyage pour faciliter l'opération de collage)
- deux roues : l'emplacement d'une vignette sur un véhicule à deux roues est très différent selon l'utilisateur : elle peut être placée sous le siège, sous le saute-vent, sur le bord du support de clé de contact, sur un support spécifique au-dessus de l'étrier de frein avant, ...

Ces multiples possibilités d'implémentation induisent trois problématiques : la récupération des coordonnées GPS (un GPS a besoin d'une visibilité avec l'extérieur), la récupération d'énergie, et la méthode de fixation. C'est pour cette raison que le dispositif d'enregistrement de données de l'invention dispose donc d'un facteur de forme proche de celui d'une vignette existante, collé par l'utilisateur sur son pare-brise, dispositif au sein duquel la vignette d'assurance « classique » peut être insérée, comme cela a été décrit en relation avec les figure 1A et 1B. Une fois le dispositif d'enregistrement installé dans le véhicule, l'utilisateur connecte et associe son terminal de communication au dispositif d'enregistrement. Pour ce faire, l'utilisateur télécharge l'application idoine et la lance pour effectuer une première opération de configuration. Cette opération nécessite de connaître une référence unique liée à dispositif d'enregistrement, référence qui est présentée sous l'une des formes suivantes :
- un numéro de série ;
- une suite de caractères ;
- un code barre ;
- un QR Code.

Cette opération permet ainsi au fournisseur de services (ou à la compagnie d'assurance ou au gestionnaire d'infrastructure) de faire le lien entre l'utilisateur et le dispositif d'enregistrement de données. Dans le cas d'une mise en oeuvre par une compagnie d'assurance, l'application téléchargée par l'utilisateur est plus particulièrement l'application de la compagnie d'assurance, au sein de laquelle l'utilisateur (l'assuré) est identifié. La fonctionnalité de passerelle fournie par l'application permet alors également de lier l'assuré et le dispositif d'enregistrement. Lorsque l'utilisateur monte dans son véhicule, il n'est pas nécessaire de mettre en oeuvre une quelconque configuration. En effet, selon l'invention, une fois configuré, le dispositif d'enregistrement ne nécessite pas une connexion permanente avec le terminal de communication de l'utilisateur. Ceci permet de conserver le caractère autonome du dispositif d'enregistrement tout en libérant l'utilisateur des contraintes opérationnelles de connexion.

Ainsi, le dispositif d'enregistrement installé dans le véhicule est « oublié » par l'utilisateur : il ne nécessite pas de recharge, de réparation, de configuration particulière. Lors de la vie de dispositif d'enregistrement, aucune autre opération de « support » matériel n'est réalisée comme une recharge ou le changement de pile : le caractère autonome du dispositif d'enregistrement assure que celui-ci dispose en permanence de l'énergie suffisante pour l'enregistrement de données.

La transmission de données, ente le dispositif d'enregistrement et le terminal de communication, est réalisée, en conditions opérationnelles, par une connexion hebdomadaire au cours de laquelle le dispositif d'enregistrement transmet les données de la semaine au terminal de communication. Cette connexion permet de récupérer les dernières mesures réalisées par le dispositif d'enregistrement et permet de vérifier sa bonne utilisation. Ainsi, le dispositif d'enregistrement est en contact avec l'environnement extérieur grâce au terminal de communication de l'utilisateur, ces deux équipements communiquent dans les deux sens. Pour ce faire, afin de conserver le caractère autonome du dispositif, cette connexion est réalisée par l'intermédiaire d'un protocole de communication peu gourmand en énergie. Dans le mode de réalisation, compte tenu de l'état de l'art actuel en la matière, la technologie retenue est BLE *(« Bluetooth Low Energy»),* Selon l'invention, l'obtention des données enregistrées par le dispositif d'enregistrement est réalisée à l'initiative du terminal de communication. À nouveau cette caractéristique permet de maintenir le caractère autonome du dispositif d'enregistrement. En effet, celui-ci n'a pas à gérer une quelconque demande de connexion avec le terminal de communication. La demande énergétique est donc limitée de ce point de vue.

Par ailleurs, du point de vue du terminal de communication, les standards de communication disponibles (Wifi, BLE, Bluetooth, USB...) sont utilisés pour remonter les données obtenues à partir du dispositif d'enregistrement au serveur de gestion de données. Cette remontée n'est pas nécessairement immédiate, mais peut être réalisée en fonction des capacités de transmission de données disponibles au sein du terminal de communication de l'utilisateur. Notamment, si l'utilisateur ne dispose pas de forfait de transmission de données de type 3G/4G, la remontée des données n'est réalisée que lorsque le terminal de communication de l'utilisateur est connecté à un réseau WiFi. Ainsi, le terminal de communication de l'utilisateur joue le rôle de passerelle asynchrone vis-à-vis des serveurs de gestion de données de l'assureur.

De manière complémentaire, le dispositif d'enregistrement peut également être en mesure de transmettre des messages de faible taille et non récurrents (alerte circulation, accident du véhicule). Pour ce faire il utilise un réseau de transmission de données à faible consommation et à bas débit de type Lora, Sigfox.

### 5.3. Architecture matérielle

Comme explicité précédemment, une des caractéristiques du dispositif d'enregistrement de données de l'invention est son caractère autonome. Cette autonomie de fonctionnement est atteinte par l'utilisation de composants matériels adaptés et par l'optimisation de l'utilisation de ces composants. On présente, en relation avec la figure 3, l'architecture matérielle du dispositif d'enregistrement de données de l'invention. Le dispositif d'enregistrement comprend une source d'alimentation électrique (BATT), de type batterie rechargeable, connecté d'une part à un circuit de chargement (CHARG), lui-même connecté à une grille de cellule photo voltaïque (SCELL). Cette architecture permet de recharger la batterie du dispositif d'enregistrement en continu. Selon l'invention, dans au moins un mode de réalisation, cette grille de cellules est dimensionnée pour apporter une quantité d'énergie au moins égale à la quantité d'énergie instantanée consommée par le dispositif d'enregistrement, dans des conditions d'usage défavorable. Cette quantité est détaillée ci-après, en lien avec ce mode de réalisation. La source d'alimentation électrique (BATT) est connectée à un circuit d'alimentation (ALIM) qui délivre une alimentation électrique au module de localisation (GPS), au processeur (CPU/BLE). Dans ce mode de réalisation, le processeur embarque une unité de calcul, une mémoire interne et un composant de communication BLE. Le processeur est connecté à l'accéléromètre (ACC) afin d'obtenir les données de mouvement du dispositif (et donc du véhicule). Dans ce mode de réalisation, correspondant aux SOC usuels disponibles sur le marché, la tension d'alimentation fournie par le circuit d'alimentation est de 3,3 Volts. Les composants sont sélectionnés afin de répondre aux impératifs de faible consommation de courant. Notamment, afin de réduire la consommation électrique, les inventeurs ont fait le choix de limiter la quantité de mémoire et de n'utiliser que la mémoire disponible au niveau du processeur (soit directement sur le SOC).

Pour l'usage et l'encombrement recherché, comme explicité précédemment, la source d'alimentation électrique est une batterie de type Lithium-Polymer dont la capacité est comprise entre 595 et 1000 mAH, pour une longueur comprise entre 40 et 55 mm, une largeur comprise entre 30 et 35 mm et une épaisseur comprise entre 4 et 7 mm. Avec une telle capacité, sans rechargement (c'est-à-dire sans utilisation de la fonction de rechargement à l'aide de la cellule photovoltaïque), le temps de veille est compris entre 3 et 6 semaines environ (avec un courant consommé de 1mA en veille), et entre 2,5 et 4 jours en mode de fonctionnement nominal (consommation 10mA).

### 5.4. Fonctionnement

### 5.4.1. Modes de fonctionnement

La caractéristique (et la contrainte) principale du dispositif d'enregistrement est son autonomie. Le dispositif doit être autosuffisant et sa consommation électrique doit être faible et correspondre sensiblement aux capacités de rechargement offertes par la grille de cellules photovoltaïques. Selon les inventeurs, il n'est donc pas envisageable que le dispositif d'enregistrement soit éveillé en permanence. Néanmoins, pour que le dispositif puisse remplir ses fonctions, les inventeurs ont développés plusieurs modes de fonctionnement, qui permettent d'étager la consommation électrique. Ainsi, le dispositif d'enregistrement peut fonctionner selon l'un des modes de fonctionnement suivants :
- mode « *Sleep »* : le dispositif d'enregistrement est inactif ; il peut être sorti de ce mode par un événement extérieur (mouvement en provenance de l'accéléromètre, déplacement du véhicule, choc, réveil régulier toutes les minutes par exemple, ...) ; c'est le mode de plus basse consommation et est de l'ordre de 1mAH ;
- mode « *Run »* : le dispositif d'enregistrement réalise des mesures d'accélération ; le processeur est en fonctionnement mais la consommation reste faible, du fait de l'extinction du module GPS ;
- mode « *Acquisition »* : le module GPS est mis en route : il nécessite quelques secondes pour se localiser ; ce mode est énergivore ;
- mode « *Tracking »* : le module GPS fonctionne en permanence en route et effectue des mesures de position ;
- mode « *RUN GPS Trickle »* : identique au mode « Run », dans lequel le module GPS est allumé puis éteint régulièrement ;
- mode « *Transfert »* : les modules (GPS, ACC) sont arrêtés ; le processeur transfère ses mesures par Bluetooth au terminal de communication.

Lors de son fonctionnement, ces différents modes sont mis en oeuvre en fonction des besoins. Par exemple, le mode *« Transfert »* n'est utilisé qu'épisodiquement, en fonction de requêtes qui sont transmises par le terminal de communication de l'utilisateur. Les modes d'acquisition de données sont eux « mixés », en fonction du déplacement effectif du véhicule et/ou du volume de mémoire disponible pour l'enregistrement des données et/ou du niveau de charge de la batterie. De plus, afin de réduire la taille du dispositif et de disposer d'une plus grande autonomie, les inventeurs ont décidé de ne pas utiliser de mémoire externe pour le stockage des données de déplacement. Des lors, il est également nécessaire d'optimiser la génération des données de déplacement en fonction d'autres facteurs.

### 5.4.2. Captation et enregistrement des données de déplacement

En effet, pour sécuriser le caractère autonome du dispositif d'enregistrement, les inventeurs on fait le choix de ne pas adjoindre de mémoire complémentaire au dispositif d'enregistrement, et de minimiser la taille des données enregistrées tout en gardant le caractère pertinent de l'analyse de celle-ci à posteriori par le serveur.

Les données stockées dans le dispositif sont les suivantes :
- Accélération longitudinale et accélération latérale. Ces accélérations sont acquises sur les axes X et Y.
- Paramètres GPS : Position, Vitesse, Heure.

Compte tenu de la relative faiblesse de la taille de la mémoire du dispositif, il est nécessaire de réaliser une optimisation de la taille des données d'accélération. De plus, les inventeurs ont déterminé que l'obtention de multiples points sur des périodes courtes n'apporte pas de plus-value par rapport à la pertinence de l'analyse. Ainsi, selon l'invention, le capteur acquiert des données d'accélération à une fréquence de 100 ms, puis réalise un filtrage pour garder l'accélération moyenne sur les axes toutes les secondes. Les données d'accélération stockées ont une précision de précision de 8-bits.

La méthode de filtrage choisie par les inventeurs pour optimiser les données d'accélération, est le calcul de l'histogramme des accélérations non nulles.

Le procédé de captation et d'enregistrement de données de déplacement mis en oeuvre par le dispositif est le suivant :
- une mesure de données d'accélération, selon une période temporelle prédéterminée ;
- un enregistrement, à partir desdites données d'accélération, d'au moins un histogramme d'accélération, selon une période temporelle prédéterminée ;
- une mesure d'une vitesse de déplacement, par exemple grâce au module GPS ;
- un enregistrement de données de localisation, selon un paramétrage prédéterminé, en fonction de la vitesse de déplacement préalablement mesurée ;

Ce procédé est lié aux caractéristiques physiques du dispositif. C'est parce que le dispositif est de taille et de consommation réduite que le procédé précédent est mis en oeuvre, notamment pour le calcul et l'enregistrement de l'histogramme d'accélération : cette manière d'effectuer la captation et l'enregistrement des données permet de limiter la quantité de celles-ci et donc de réduire d'une part les besoins en mémoire et d'autre part la consommation d'énergie.

Une prédiction plus poussée du comportement des conducteurs peut cependant être affinée avec la collecte en quantité de données de comportements et la corrélation de signatures mathématiques correspondant aux différents profils des conducteurs.

Cette approche apporte surtout la capacité de collecter une première 'signature' de conduite en évitant la collecte classique de nombreuses mesures envoyées par la suite sur un serveur. Ainsi, la solution choisie est de faire une collecte d'histogramme sur une minute, donnant une dizaine de points entre -1G et +1G correspondant à l'occurrence de l'accélération correspondante mesurée toutes les secondes. Ce type d'analyse permet alors de n'avoir à stocker et à transférer qu'une dizaine de valeurs chaque minute au lieu des soixante valeurs correspondant à une mesure d'accélération par seconde.

La mesure de la qualité de conduite est ainsi réalisée par les actions suivantes à intervalles prédéfinis :
- mesure des accélérations sur X (axe longitudinal) et Y (axe latéral) ;
- application d'un premier filtrage passe-bas ;
- calcul du cumul des histogrammes sur une période donnée pour des accélérations allant de -1 à +1 G.

La seconde mesure réalisée par le capteur concerne la position GPS. Compte tenu de sa consommation électrique importante, l'utilisation du GPS est limitée afin de privilégier l'autonomie du dispositif d'enregistrement, par ailleurs et sur le même modèle de ce qui est fait concernant les données d'accélération, la taille données GPS est optimisée dans le dispositif d'enregistrement, et cela en introduisant de l'intelligence et de la contextualisation dans la prise de ces mesures.

Afin d'optimiser la taille des données GPS collectées tout en gardant la pertinence de l'analyse de ces données, les règles suivantes sont implémentées dans le dispositif :
- pas d'enregistrement de données GPS lorsque le véhicule est arrêté (cas d'embouteillage ou attente à un feu tricolore, par exemple) ;
- Une mesure tous les 300 mètres sur autoroute (vitesse supérieure à 90 KMH) ;
- Une mesure tous les 150 mètres sur nationale (vitesse supérieure à 70 KMH) ;
- Une mesure tous les 50 mètres en ville (vitesse inférieure à 70 KMH).

Cette configuration (ce paramétrage) de la prise de mesure du dispositif d'enregistrement permet de diviser la taille des données transmises par vingt (par rapport à une prise de mesure brute tous les cinquante mètres sans histogrammes) et est donc nettement plus efficace au niveau de l'espace mémoire et de la transmission de données. En effet, on dispose d'un mécanisme qui permet de répondre aux problématiques soulevées et notamment, avec la méthode proposée qui permet d'optimiser la taille des données envoyées en transmettant un histogramme des accélérations par type d'accélération au lieu de transmettre toutes les accélérations comme cela peut être proposé par d'autres techniques connues. On économise ainsi de l'espace mémoire sur le dispositif et de l'énergie (pour la conservation des histogrammes et non de toutes les données d'accélération et pour la transmission des histogrammes (et non de toutes les données d'accélération).

### 5.4.3. Transmission de données de déplacement au terminal de communication

À intervalles réguliers, l'application dédiée, installée sur le terminal de communication de l'utilisateur, interroge le dispositif d'enregistrement afin de récupérer les données de déplacement (histogramme des accélérations non nulles notamment) du véhicule au sein duquel le dispositif est installé. Cet intervalle est fonction de divers paramètres dont notamment le temps écoulé depuis la dernière transmission (du fait de la limitation de la quantité de mémoire du dispositif d'enregistrement).

La transmission de données du dispositif d'enregistrement comprend les étapes suivantes :
- transmission, par le terminal de communication, d'une requête d'appairage au dispositif d'enregistrement à l'aide des données d'appairage définies lors de la configuration du dispositif d'enregistrement et enregistrées dans l'application installée sur le terminal de communication ;
- transmission, par le dispositif d'enregistrement, des données de déplacement précédemment enregistrées (histogramme des accélérations non nulles notamment) ;
- réception, par le terminal de communication, des données de déplacement en provenance du dispositif d'enregistrement ;
- contrôle et validation, par le terminal de communication, des données reçues, comprenant notamment le contrôle de la validité des données ;
- lorsque les données reçues sont valides, transmission, par le terminal de communication, au dispositif d'enregistrement, d'une requête d'effacement des données enregistrées ;

Ainsi, on assure que le terminal de communication a correctement reçu les données en provenance du dispositif d'enregistrement avant de supprimer celles-ci. Par ailleurs, le contrôle des données peut également mettre en oeuvre un processus cryptographique, comprenant notamment un hachage des données transmises, afin de vérifier que ces données ne sont pas compromises par un dispositif externe cherchant à se substituer au dispositif d'enregistrement. Le hachage peut être réalisé sur l'ensemble des données ou bien par bloc de données lorsque celles-ci sont transmises par bloc. De manière complémentaire, en en plus des données de déplacement, le dispositif d'enregistrement transmets des données complémentaires représentatives de son état de fonctionnement. Ceci permet astucieusement d'établir un suivi de fonctionnement du dispositif d'enregistrement, tant par le terminal de communication de l'utilisateur que par la plateforme de gestion. Parmi les données qui sont transmises, on trouvera notamment : l'état de charge de la batterie, l'intensité du courant fourni par la cellule photovoltaïque, la dernière position GPS connue, le temps d'utilisation du dispositif depuis la dernière transmission, etc. Ces informations sont notamment utilisées pour permettre à l'utilisateur et/ou à la plateforme de gestion de pré diagnostiquer des pannes éventuelles du dispositif d'enregistrement ou à des fins statistiques.

L'ensemble de ces données est enregistré au sein du terminal de communication de l'utilisateur dans un espace de stockage de l'application, en attendant une éventuelle transmission à la plateforme de gestion.

Des modules logiciels sont implémentés et intégrés dans des applications mobiles iOS et Android. Ces modules permettent :
- au terminal de communication de s'appairer avec le dispositif d'enregistrement ;
- de récupérer les données enregistrées sur le dispositif d'enregistrement ;
- de lancer la commande d'effacement de la mémoire du dispositif d'enregistrement ;
- de transférer ces données au serveur distant quand la connexion réseau le permet ;
- de recevoir du serveur, puis de transmettre au capteur des commandes de pilotage de la LED intégrée dans le dispositif d'enregistrement (voir infra) ;
- de récupérer des données d'usage du dispositif d'enregistrement et de les transmettre au serveur (charge batterie, mémoire libre, détail de la consommation d'énergie, détail de la production d'énergie).
- de réaliser l'enregistrement et l'effacement dans la mémoire du dispositif d'enregistrement de données transmises par le serveur.

Ainsi, le dispositif d'enregistrement peut être piloté à distance, depuis le serveur de traitement de la plateforme de gestion, en utilisant le terminal de communication de l'utilisateur comme une passerelle de transmission/réception de données et de commandes.

### 5.4.4. Transmission des données de déplacement à la plateforme de gestion

Au moins un comptant de l'application du terminal de communication de l'utilisateur s'exécute en tâche de fond, au démarrage du terminal de communication. L'application est ainsi à même de détecter le moment opportun de transmission des données précédemment obtenues de la part du dispositif d'enregistrement à la plateforme de gestion. En ce sens, l'application, et le terminal de communication de l'utilisateur, jouent le rôle de passerelle asynchrone de transmission de données. A réception de ces données, la plateforme de gestion est à même de traiter celles-ci puis éventuellement de retourner, à l'application, des données statistiques à l'utilisateur, afin par exemple de qualifier la conduite de celui-ci au regard d'une population de référence.

### 5.5. Autres caractéristiques et avantages

Au-delà de la fonctionnalité d'enregistrement et de transmission de données, le dispositif d'enregistrement dispose de caractéristiques complémentaires permettant d'apporter des de l'information complémentaire à destinations des utilisateurs (au conducteur du véhicule par exemple), voire à des utilisateurs externes. Notamment, dans au moins un mode de réalisation, le dispositif d'enregistrement comprend, sur sa face antérieure (au contact du parebrise), au moins une diode électroluminescente (LED), pilotable à distance, par l'intermédiaire notamment d'une connexion au terminal de communication de l'utilisateur. En fonction d'une gamme de couleurs et/ou d'indicateur, définis par le gestionnaire des dispositifs d'enregistrement (par exemple l'assurance ou le gestionnaire de parc de véhicule), ou par l'utilisateur du véhicule lui-même, l'allumage, l'extinction, la couleur de la diode électroluminescente peut être pilotée pour transmettre une information aux utilisateurs se trouvant à l'extérieur du véhicule. Plusieurs situations peuvent ainsi être signalées par l'intermédiaire du dispositif, comme :
- une situation de « Co-voiturage » : en cas de co-voiturage une signalisation permet aux forces de l'ordre en cas de restriction de la circulation de savoir en un coup d'oeil si le véhicule est utilisé pour un co-voiturage, et cela même si les personnes covoiturées ont été déposées quelques mètres avant le contrôle ; permet également aux covoiturés de repérer un véhicule plus facilement sur une aire de covoiturage ;
- une situation de la « restriction de la circulation », par exemple pour cause de pollution : selon l'ancienneté du véhicule et en complément de la vignette « CRIT'Air », une couleur peut faciliter le control visuel du véhicule.

D'autres situations sont bien entendu adressables par l'utilisation d'une telle information externe, en lien avec le véhicule de l'utilisateur.

## Revendications

1. Dispositif d'enregistrement de données de déplacement (DE2D) de véhicule à moteur, dispositif comprenant des moyens de captation et d'enregistrement de données en provenance d'au moins un module de mesure d'accélération (ACC) et d'au moins un module de localisation (GPS), dispositif se présentant sous la forme d'un parallélépipède rectangle comprenant une face antérieure (FA) et une face postérieure, dispositif comprenant des moyens de fixation (PVA, FIX) sur la face interne d'un parebrise d'un véhicule à moteur, les moyens de fixation étant positionnés sur la face antérieure du dispositif d'enregistrement de données de déplacement et en ce que la face antérieure (FA) comprend en outre au moins une grille d'au moins une cellule photovoltaïque (CELL), positionnée de sorte qu'elle puisse recevoir de la lumière en provenance de l'extérieur du véhicule à moteur, ledit dispositif étant **caractérisé en ce qu'**il comprend en outre au moins un logement d'insertion d'un justificatif d'assurance (PVA) et **en ce que** le logement d'insertion d'un justificatif d'assurance comprend les moyens de fixation dudit dispositif d'enregistrement des données de déplacement audit parebrise.

2. Dispositif d'enregistrement de données de déplacement, selon la revendication 1, **caractérisé en ce que** le dispositif comprend en outre au moins une diode électroluminescente disposée de sorte qu'elle soit visible de l'extérieur du véhicule à moteur.

3. Dispositif d'enregistrement de données de déplacement, selon la revendication 1, **caractérisé en ce que** le dispositif comprend en outre des moyens de traitement de commandes d'activation et de modulation une diode électroluminescente, lesdites commandes provenant d'au moins un terminal de communication d'un utilisateur.

4. Dispositif d'enregistrement de données de déplacement, selon la revendication 1, **caractérisé en ce qu'**il comprend en outre des moyens de transmission de données à destination d'au moins un terminal de communication d'un utilisateur.

5. Dispositif d'enregistrement de données de déplacement, selon la revendication 4, **caractérisé en ce que** lesdits moyens de transmission de données sont activés sur requête du terminal de communication de l'utilisateur.

6. Procédé d'enregistrement de données de déplacement de véhicule à moteur, procédé mise en oeuvre au sein d'un dispositif d'enregistrement de données de déplacement selon l'une quelconque des revendications 1 à 5, procédé **caractérisé en ce qu'**il comprend :
- une mesure de données d'accélération, selon une première période temporelle prédéterminée, à l'aide dudit au moins un module de mesure d'accélération ;
- un enregistrement, à partir desdites données d'accélération, d'au moins un histogramme d'accélération, selon une deuxième période temporelle prédéterminée, supérieure à la première période temporelle prédéterminée ;
- une mesure d'une vitesse de déplacement ;
- un enregistrement de données de localisation, selon un paramétrage prédéterminé, en fonction de la vitesse de déplacement préalablement mesurée ;

7. Procédé d'enregistrement de données de déplacement selon la revendication 6, **caractérisé en ce qu'**il comprend au moins une étape complémentaire de transmission dudit au moins un histogramme à un terminal de communication.

8. Procédé d'enregistrement de données de déplacement selon la revendication 6, caractérisé en ce l'étape de transmission dudit au moins un histogramme à un terminal de communication est mise en oeuvre de selon une périodicité prédéterminée.

## Patentansprüche

1. Vorrichtung zur Aufzeichnung von Bewegungsdaten (DE2D) eines Kraftfahrzeugs, wobei die Vorrichtung Mittel zur Erfassung und Aufzeichnung von Daten, die von mindestens einem Beschleunigungsmessmodul (ACC) und mindestens einem Ortungsmodul (GPS) stammen, aufweist, wobei die Vorrichtung die Form eines rechteckigen Parallelepipeds mit einer Vorderseite (FA) und einer Rückseite hat, wobei die Vorrichtung Befestigungsmittel (PVA, FIX) an der Innenseite einer Windschutzscheibe eines Kraftfahrzeugs aufweist, wobei die Befestigungsmittel auf der Vorderseite der Vorrichtung zur Aufzeichnung von Bewegungsdaten positioniert sind und dass die Vorderseite (FA) außerdem mindestens ein Gitter mindestens einer photovoltaischen Zelle (CELL) umfasst, die so positioniert ist, dass sie Licht von der Außenseite des Kraftfahrzeugs empfangen kann, wobei die Vorrichtung **dadurch gekennzeichnet ist, dass** sie außerdem mindestens eine Aufnahme zum Einführen eines Versicherungsnachweises (PVA) umfasst und dass die Aufnahme zum Einführen eines Versicherungsnachweises die Befestigungsmittel der Vorrichtung zur Aufzeichnung von Bewegungsdaten an der Windschutzscheibe umfasst.

2. Vorrichtung zur Aufzeichnung von Bewegungsdaten nach Anspruch 1, **dadurch gekennzeichnet, dass** die Vorrichtung außerdem mindestens eine Leuchtdiode umfasst, die so angeordnet ist, dass sie von außerhalb des Kraftfahrzeugs sichtbar ist.

3. Vorrichtung zur Aufzeichnung von Bewegungsdaten nach Anspruch 1, **dadurch gekennzeichnet, dass** die Vorrichtung außerdem Mittel zur Verarbeitung von Befehlen zur Aktivierung und Modulation einer Leuchtdiode umfasst, wobei die Befehle von mindestens einem Kommunikationsendgerät eines Benutzers stammen.

4. Vorrichtung zur Aufzeichnung von Bewegungsdaten nach Anspruch 1, **dadurch gekennzeichnet, dass** sie außerdem Mittel zur Übertragung von Daten an ein Ziel von mindestens einem Kommunikationsendgerät eines Benutzers umfasst.

5. Vorrichtung zur Aufzeichnung von Bewegungsdaten nach Anspruch 4, **dadurch gekennzeichnet, dass** die Mittel zur Übertragung von Daten auf Anforderung des Kommunikationsendgeräts des Benutzers aktiviert werden.

6. Verfahren zur Aufzeichnung von Bewegungsdaten eines Kraftfahrzeugs, das innerhalb einer Vorrichtung zur Aufzeichnung von Bewegungsdaten nach einem der Ansprüche 1 bis 5 durchgeführt wird, wobei das Verfahren **dadurch gekennzeichnet ist, dass** es umfasst:
- eine Messung von Beschleunigungsdaten gemäß einer ersten vorbestimmten Zeitperiode mit Hilfe des mindestens einen Beschleunigungsmessmoduls ;
- eine Aufzeichnung, ausgehend von den Beschleunigungsdaten, mindestens eines Beschleunigungshistogramms gemäß einer zweiten vorbestimmten Zeitperiode, die größer als die erste vorbestimmte Zeitperiode ist;
- eine Messung einer Bewegungsgeschwindigkeit;
- eine Aufzeichnung von Standortdaten gemäß einer vorbestimmten Parametrierung in Abhängigkeit von der zuvor gemessenen Bewegungsgeschwindigkeit;

7. Verfahren zur Aufzeichnung von Bewegungsdaten nach Anspruch 6, **dadurch gekennzeichnet, dass** es zusätzlich mindestens einen Schritt zur Übertragung des mindestens einen Histogramms an ein Kommunikationsendgerät umfasst.

8. Verfahren zur Aufzeichnung von Bewegungsdaten nach Anspruch 6, **dadurch gekennzeichnet, dass** der Schritt der Übertragung des mindestens einen Histogramms an ein Kommunikationsendgerät gemäß einer vorbestimmten Periodizität durchgeführt wird.

## Claims

1. A device for recording movement data (DE2D) of a motor vehicle, the device comprising means for sensing and recording data from at least one acceleration measurement module (ACC) and at least one location module (GPS), which device is shaped as a rectangular parallelepiped comprising an anterior face (FA) and a posterior face, which device comprises attachment means (PVA, FIX) for attaching a windshield of a motor vehicle on the inner face, the attachment means being positioned on the anterior face of the movement data recording device and in that the anterior face (FA) further comprises at least one gate of at least one photovoltaic cell (CELL), positioned so that it can receive light from outside of the motor vehicle, said device being **characterised in that** it further comprises at least one housing for inserting an insurance voucher (PVA) and **in that** the housing for inserting an insurance voucher comprises the means for attaching said movement data recording device to said windshield.

2. The movement data recording device, according to claim 1, **characterised in that** the device further comprises at least one light emitting diode disposed so as to be visible from outside of the motor vehicle.

3. The movement data recording device, according to claim 1, **characterised in that** the device further comprises means for processing commands for activating and modulating a light emitting diode, said commands coming from at least one communication terminal of a user.

4. The movement data recording device, according to claim 1, **characterised in that** it further comprises means for transmitting data to at least one communication terminal of a user.

5. The movement data recording device, according to claim 4, **characterised in that** said data transmission means are activated upon request from the communication terminal of the user.

6. A method for recording movement data of a motor vehicle, which method is implemented within a movement data recording device according to any of claims 1 to 5, which method is **characterised in that** it comprises:
- measuring acceleration data, in a first predetermined time period, using said at least one acceleration measurement module;
- recording, from said acceleration data, at least one acceleration histogram, in a second predetermined time period, greater than the first predetermined time period;
- measuring a movement speed;
- recording location data, according to a predetermined setting, as a function of the movement speed previously measured.

7. The movement data recording method according to claim 6, **characterised in that** it comprises at least one additional step of transmitting said at least one histogram to a communication terminal.

8. The movement data recording method according to claim 6, **characterised in that** the step of transmitting said at least one histogram to a communication terminal is implemented at a predetermined periodicity.
